## Europäisches Patentamt

## European Patent Office

## Office européen des brevets

(11) Veröffentlichungsnummer: **0 002 527**
**B1**

(12) ## EUROPÄISCHE PATENTSCHRIFT

(45) Veröffentlichungstag der Patentschrift:
**12.10.83**

(51) Int. Cl.³: **B 23 Q 39/04,** B 23 Q 1/02

(21) Anmeldenummer: **78101681.1**

(22) Anmeldetag: **14.12.78**

(54) **Transferautomat mit kreisförmiger Zubringbewegung.**

(30) Priorität: **14.12.77 DE 2755755**

(43) Veröffentlichungstag der Anmeldung:
**27.06.79 Patentblatt 79/13**

. (45) Bekanntmachung des Hinweises auf die Patenterteilung:
**12.10.83 Patentblatt 83/41**

(84) Benannte Vertragsstaaten:
**FR GB IT**

(56) Entgegenhaltungen:
FR-A-2238552
US-A-1671354
US-A-2789480
US-A-2803840

**Werkstatt und Betrieb, 106. Jahrgang, Mai 1983, München, DE VON OBERING «Mehrwege-Halbautomaten mit hängendem Teilkopf», Seite 319**

(73) Patentinhaber: **Witzig & Frank - Martin GmbH Maschinenfabrik, Am Holderstock 2, D-7600 Offenburg (DE)**

(72) Erfinder: **Bezner, Heinz, Im Wolfsgalgen 19, D-7141 Schwieberdingen (DE)**
Erfinder: **Blochmann, Rudolf, Reichenberger Strasse 5, D-7250 Leonberg (DE)**
Erfinder: **Bratz, Manfred, Untere Burghalde 26, D-7250 Leonberg (DE)**
Erfinder: **Frank, Sven, Dipl.-Ing., Wilhelm-Lächele-Strasse 20, D-7141 Freiberg (DE)**
Erfinder: **Grau, Wolfgang, Keplerstrasse 5, D-7030 Böblingen-Dagersheim (DE)**
Erfinder: **Semsky, Hans-Jörg, Wendelin-Hippler-Strasse 53, D-7000 Stuttgart 31 (DE)**
Erfinder: **Walter, Heinz, Sparnsbergstrasse 11, D-7253 Renningen-Malmsheim (DE)**
Erfinder: **Witzig, Armin, Dipl.-Ing., Römerstrasse 6, D-7253 Renningen (DE)**

(74) Vertreter: **Rüger, Rudolf, Dr.-Ing. et al, Webergasse 3 Postfach 348, D-7300 Esslingen/Neckar (DE)**

Transferautomat mit kreisförmiger Zubringbewegung

Die Erfindung betrifft einen Transferautomat mit kreisförmiger Zubringbewegung für die in einzelnen Bearbeitungsstationen durch Bearbeitungseinheiten aufeinanderfolgend bearbeitbaren Werkstücke, mit einem um eine Vertikalachse drehbar gelagerten und durch einen Schrittantrieb schrittweise weiterschaltbaren Werkstückträger, auf dem Spannvorrichtungen für die Werkstücke angeordnet sind und der in den einzelnen Bearbeitungsstationen entsprechenden Winkelstellungen ortsfest verriegelbar ist, wobei der Werkstückträger zwischen zwei im Abstand zu ihm gehaltenen ortsfesten, im wesentlichen scheibenförmigen Wandteilen angeordnet ist, von denen das untere Wandteil durch von Bearbeitungskräften freie Stützteile in einer die erforderliche Arbeitshöhe des Werkstückträgers ergebenden Höhe gehalten ist, in welche Wandteile von oben und von unten her wirkende Bearbeitungseinheiten jeweils von aussen her eingesetzt sind und auf die randseitig sich zwischen ihnen erstreckende Konstruktionselemente aufgesetzt sind, in die von aussen her ebenfalls Bearbeitungseinheiten eingesetzt sind.

Ein Transferautomat mit diesen Merkmalen ist bekannt (DE-A-2508571). Die Anordnung ist dabei derart getroffen, dass das untere Wandteil mit einem zentrisch angeordneten säulenartigen Sockelteil verschraubt ist, das sich auf der anderen Seite des unteren Wandteiles in eine Mittelsäule fortsetzt, auf die endseitig das obere Wandteil aufgesetzt ist, das mit der Mittelsäule verschraubt ist. Auf der die beiden Wandteile starr miteinander verbindenden Mitteisäule ist der ringförmige Werkstückträger zwischen den im Abstand zu ihm gehaltenen Wandteilen liegend drehbar gelagert. Um die auf dem Werkstückträger gespannten Werkstücke nicht nur von oben und von unten her, sondern erforderlichenfalls auch radial von aussen her bearbeiten zu können, sind im Bereiche einzelner Bearbeitungsstationen die beiden im wesentlichen scheibenförmigen Wandteile durch starre Bügel miteinander verbunden, in denen entsprechende Bearbeitungseinheiten sitzen.

Wegen der sich zwischen dem oberen und dem unteren scheibenförmigen Wandteil erstreckenden, den Werkstückträger tragenden Mittelsäule ist die Zugänglichkeit der Bearbeitungsstellen der einzelnen Werkstücke beeinträchtigt. Ausserdem muss die Späneabfuhr seitlich neben der Mittelsäule geschehen, was bedeutet, dass das untere Wandteil eine aussermittige Späneabfuröffnung aufweisen muss, zu der eine eigene, in dem unteren Wandteil vorgesehene Späneauffangschale führt, in welcher ein mit dem Werkstückträger umlaufender Späneschieber wirkt, der die an den von der Späneabfuhröffnung weiter entfernt liegenden Bearbeitungsstationen anfallenden Späne in die Späneabfuhröffnung transportiert. Bei der Bearbeitung von Werkstücken aus einem langspanenden Werkstück, beispielsweise von Kupfer-Fittings, besteht die Gefahr, dass die langen Späne sich mit dem Späneschieber und sodann mit den Werkzeugen verheddern und damit zur Beschädigung von Werkstücken oder Werkzeugen, auf jeden Fall aber zu einer Betriebsunterbrechung, führen. Auch bedingt eine aussermittig angeordnete Späneabfuröffnung in dem unteren Wandteil eine unsymmetrische Schwächung dieses Wandteils, die mit Rücksicht auf die Bearbeitungsgenauigkeit unerwünscht ist.

Schliesslich sind die randseitig sich zwischen den beiden scheibenförmigen Wandteilen erstreckenden Konstruktionselemente in der Regel lediglich bedarfsgemäss an einzelnen Bearbeitungsstationen vorgesehen, wobei sie auf die Wandteile derart aufgesetzt sind, dass sich keine unzulässige Verspannung dieser Wandteile ergibt. Dies bedeutet, dass die scheibenförmigen Wandteile und die Mittelsäule konstruktiv derart ausgelegt sein müssen, dass die von den bei der Bearbeitung auftretenden, in Richtung der Pinolen der Bearbeitungseinheiten wirkenden Kräften hervorgerufenen elastischen Verformungen auch ohne diese randseitigen Konstruktionselemente auf dem durch die erzielbare Bearbeitungsgenauigkeit vorgegebenen kleinen Wert gehalten werden müssen. Die Mittelsäule weist deshalb einen verhältnismässig grossen Durchmesser auf, womit, wie schon erwähnt, die Zugänglichkeit der Bearbeitungsstellen, konstruktiv bedingt, in unerwünschtem Masse beschränkt ist.

Bei einem anderen bekannten Transferautomaten (Zeitschrift «Werkstatt und Betrieb» 106, Seite 319 ff) ist der Werkstückträger im Inneren eines kastenartigen Gehäuses von rechteckiger Querschnittsgestalt angeordnet, das mit seiner Bodenwand unmittelbar auf den Fussboden aufgestellt ist und in dessen vertikale Seitenwände, ebenso wie in die horizontale Deckwand, von aussen her die Bearbeitungseinheiten eingesetzt sind. Der Werkstückträger ist dabei im Gehäuseinneren nur an dem die Deckenwand bildenden, oberen Wandteil drehbar gelagert, aufgehängt. Das bedingt, das in dem kastenartigen Gehäuse unterhalb des Werkstückträgers ein eigener Spänefangrichter mit einer zur Gehäuseaussenseite führenden Spänerutsche vorgesehen werden muss, um eine ordnungsgemässe Späneabfuhr zu gewährleisten. Gleichzeitig müssen aber die mit ihren Pinolen von unten her wirkenden Bearbeitungseinheiten im Gehäuseinneren untergebracht sein, was eigene, innerhalb des Gehäuses liegende Aufhänge- und Lagervorrichtungen bedingt. Damit sind, prinzipbedingt, die unteren Arbeitseinheiten lediglich schwer zugänglich; sie können nicht ohne weiteres herausgenommen werden, und da sie grundsätzlich innerhalb des Kühlmittel- und Späneraumes liegen, müssen sie durch das Spänefangblech abgedeckt und geschützt werden, womit die Zugänglichkeit für Einstell- und Wartungsarbeiten weiter verringert wird.

Schliesslich muss ein solches schrankartiges Kastengehäuse, das mit seiner Bodenwand unmittelbar auf dem Fussboden aufgesetzt ist, bei der Aufstellung sehr sorgfältig einjustiert werden, weil alle Justierungsfehler zu einer Verwindung des Gehäuses führen und damit die Bearbeitungsgenauigkeit beeinträchtigen können. Die Anforderungen an die Maschinenfundamente sind deshalb verhältnismässig hoch. Davon abgesehen müssen die Seitenwände eine beträchtliche durchgehende Höhe aufweisen, weil in dem Gehäuseinneren zusätzlich zu dem Werkstückträger und dem Spänefangblech noch die lediglich von innen her einsetzbaren unteren Bearbeitungseinheiten untergebracht sein müssen. Dies bedingt mit Rücksicht auf die zu erzielende Bearbeitungsgenauigkeit einen verhältnismässig hohen konstruktiven Aufwand, um die notwendige Steifigkeit und Verwindungssicherheit des kastenartigen Gehäuses zu gewährleisten.

Zur Erzielung einer hohen Steifigkeit bei verhältnismässig geringem Materialaufwand ist es im Werkzeugmaschinenbau bekannt, tragende Teile, beispielsweise eine Säule (US-A-2 789 480) zweischalig in Schweisskonstruktion auszubilden, wobei die beiden Schalen durch aussteifende Querrippen miteinander verbunden sind, die z. B. eine V-förmige Gestalt aufweisen können.

Ausgehend von diesem Stand der Technik ist es Aufgabe der Erfindung, einen Transferautomaten der eingangs genannten Gattung derart zu verbessern, dass er zur Bearbeitung langspanender Werkstoffe geeignet, sich bei hervorragender Zugänglichkeit der Werkstücke und Werkzeuge der Bearbeitungseinheiten durch einen einfachen verwindungs- und verformungssicheren Aufbau auszeichnet, der eine hohe Bearbeitungsgenauigkeit ergibt, wobei gleichzeitig der an sich bekannte Vorteil aufrecht erhalten bleibt, dass sämtliche Bearbeitungseinheiten, d. h. auch die von unten her wirkenden, von aussen her eingesetzt und deshalb mit ihren Antriebs- und Vorschubeinrichtungen ausserhalb des Späne- und Kühlmittelraumes liegend frei zugänglich sind.

Zur Lösung dieser Aufgabe ist der genannte Transferautomat erfindungsgemäss dadurch gekennzeichnet, dass die beiden scheibenförmigen Wandteile lediglich zusammen mit den ringsum seitlich angeordneten Konstruktionsteilen einen starren zweischaligen Käfig bilden, der in Schweisskonstruktion ausgeführt ist und dessen beide Schalen durch aussteifende Querrippen miteinander verbunden sind, dass der Werkstückträger im Käfiginneren nur an dem oberen Wandteil drehbar gelagert aufgehängt ist, und dass die innere Schale des unteren Wandteiles nach Art einer Wanne ausgebildet ist und eine mittige Späneabfuhröffnung aufweist.

Der starre Käfig bildet ein in sich geschlossenes System, das die bei der Bearbeitung auftretenden Reaktionskräfte in sich aufnimmt, ohne dass dazu eine sich zwischen den beiden scheibenförmigen Wandteilen erstreckende Mittelsäule nötig wäre oder eine Kraftaufnahme durch sich bis auf die Aufstellfläche, d. h. den Fussboden erstreckende Ständerteile oder dergleichen erfolgt. Die Höhenabmessungen des Käfigs sind lediglich durch den Zustell- und Pinolenweg sowie die Werkzeuglänge der oberen und unteren Bearbeitungseinheiten bedingt; sie können deshalb verhältnismässig klein gehalten werden, so dass sich der Käfig bei geringem Aufwand durch eine hervorragende Steifigkeit auszeichnet, mit dem Ergebnis, dass auch Räum-, Stoss- und Pressarbeiten mit hoher Genauigkeit durchgeführt werden können, wie es überhaupt möglich ist, Bearbeitungsvorgänge auszuführen, bei denen sehr hohe Bearbeitungskräfte auftreten. Dabei ergibt die mittige Späneabfuhröffnung, die von allen Bearbeitungsstationen im gleichen Abstand liegt, eine unbehinderte Späneabfuhr, so dass auch langspanende Werkstoffe, beispielsweise Kupfer, ohne weiteres bearbeitet werden können.

Die durch die Späneabfuhröffnung an sich bedingte. Schwächung des unteren Wandteils ist zum einen deshalb nicht so sehr ins Gewicht fallend, weil die Späneabfuhröffnung mittig angeordnet ist, so dass der symmetrische Aufbau des unteren Wandteils nicht gestört wird, und zum anderen, weil diese Schwächung durch den zweischaligen Aufbau des unteren Wandteils wieder kompensiert ist. Die innere Schale des Wandteils erfüllt dabei eine zweifache Funktion, indem sie einmal zur Erzielung der notwendigen Steifigkeit beiträgt und zum anderen gleichzeitig die Spänewanne bildet, die im Zusammenwirken mit der mittigen Späneabfuhröffnung einen einwandfreien Späneabfluss gewährleistet, und zwar ohne dass dabei in Kauf genommen werden müsste, dass die unteren Arbeitseinheiten in dem Späne- und Kühlmittelraum liegen und durch eigene Späneabfuhrbleche und dergleichen geschützt werden müssten.

Da bei Transferautomaten der infragestehenden Gattung das untere Wandteil durch von Bearbeitungskräften freie Stützteile in einer die erforderliche Arbeitshöhe des Werkstückträgers ergebenden Höhe gehalten ist, wäre es grundsätzlich möglich, den Käfig insgesamt an einer geeigneten Konstruktion aufzuhängen. Sehr einfache konstruktive Verhältnisse ergeben sich aber, wenn der Käfig durch eine hohle Mittelsäule abgestützt ist, die als Späneabfuhrrohr ausgebildet ist und in die die Späneabfuhröffnung mündet. Damit erübrigt sich ein eigener Späneabfuhrtrichter oder dergleichen. Sollen bei dieser Anordnung die Späne seitlich oberhalb der Aufstellfläche des Transferautomaten abgeführt werden, so kann die Anordnung derart getroffen werden, dass die Mittelsäule eine seitliche Späneabfuhröffnung aufweist, an die sich eine im Inneren der Mittelsäule angeordnete Spänerutsche anschliesst.

Der Käfig hat mit Vorteil in der Horizontalebene eine im wesentlichen kreisrunde Querschnittsgestalt, die günstige symmetrische Kraftaufnahmeverhältnisse gewährleistet. Er kann darüber hinaus im Bereiche einer Bedienungsstation einen segmentartigen Ausschnitt aufweisen, um damit die Bedienung des Werkstückträgers zu erleichtern.

Vorteilhaft ist es, wenn die ausserhalb des Käfigs liegenden Bearbeitungseinheiten mit Halterungsteilen von aussen her in entsprechende Lagerteile des Käfigs eingesetzt sind, die in dem oberen und/oder unteren Wandteil sowie in den seitlichen Konstruktionselementen des Käfigs angeordnet sind. Die Bearbeitungseinheiten liegen damit ausserhalb des Späne- und Kühlmittelraums; lediglich ihre Pinolen stechen in den Käfiginnenraum vor. Eine Beeinträchtigung der Bearbeitungseinheiten, deren Vorschubeinrichtung, Getriebe usw. durch Schmiermittel, Kühlmittel, Späne usw. ist deshalb ausgeschlossen, während die Bearbeitungseinheiten selbst von aussen her gewartet und mit Strom, Druckluft usw. versorgt werden können.

Der Werkstückträger sitzt mit Vorteil auf einer Schalttrommel, die in dem oberen Wandteil des Käfigs nach oben zu herausnehmbar gelagert ist, so dass für Wartungs- oder Überholungsarbeiten eine sehr leichte Demontagemöglichkeit des Werkstückträgers gegeben ist. Um schliesslich die Werkzeuge der einzelnen Bearbeitungseinheiten leicht einstellen und auswechseln zu können, ist es vorteilhaft, wenn der Käfig im Bereiche der einzelnen Bearbeitungsstationen die Wartung der Werkzeuge der Bearbeitungseinheiten gestattende Bedienungsöffnungen aufweist.

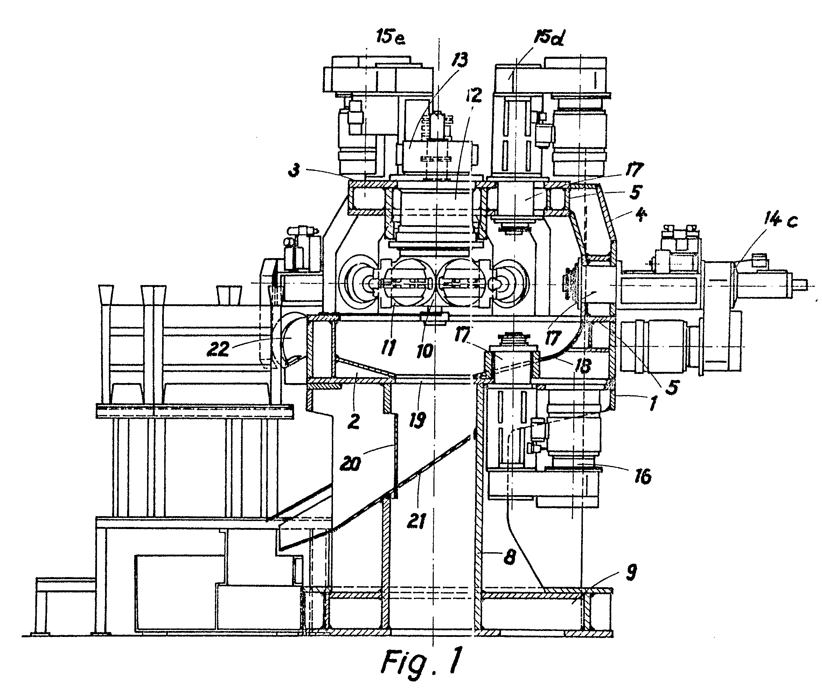

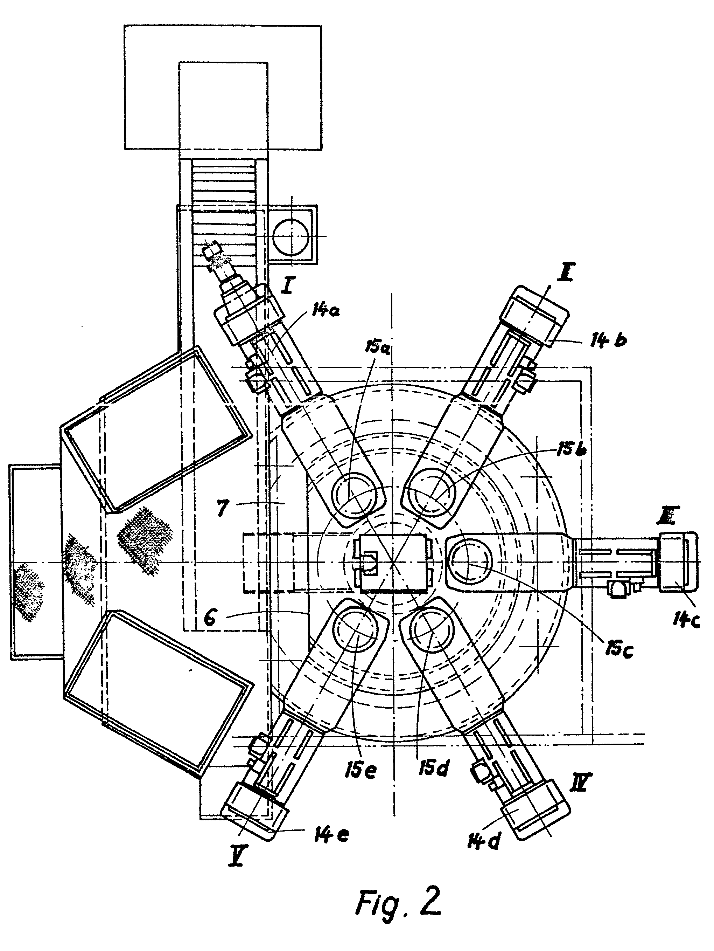

In der Zeichnung ist ein Ausführungsbeispiel des Gegenstandes der Erfindung dargestellt. Es zeigt Fig. 1 einen Transferautomaten gemäss der Erfindung, im axialen Schnitt, in einer Seitenansicht und Fig. 2 den Transferautomaten nach Fig. 1 in einer Draufsicht.

Der Transferautomat weist einen gehäuseartigen, geschlossenen Käfig 1 auf, der mit einem scheibenartigen, unteren Wandteil 2 und einem im Abstand dazu angeordneten, im wesentlichen ebenfalls scheibenartigen oberen Wandteil versehen ist und dessen beide Wandteile 2, 3 lediglich durch ringsum angeordnete Konstruktionselemente in Gestalt von angeschweissten starren Scheiben 4 miteinander verbunden sind. Die beiden im Abstand zueinander stehenden Wandteile 2, 3 und die Streben 4 sind jeweils zweischalig ausgebildet, wobei die beiden Schalen jeweils durch versteifende Rippen miteinander verbunden sind, von denen einige beispielsweise bei 5 in Fig. 1 ersichtlich sind.

Der in der Draufsicht eine im wesentlichen kreisrunde Querschnittsgestalt aufweisende Käfig 1 weist an einer Bedienungsstation – in Fig. 1, 2 auf der linken Seite – einen durch eine Sekante 6 begrenzten, segmentartigen Ausschnitt 7 auf, der einen leichten Zugang zum Käfiginneren gestattet. Der Käfig ist im übrigen in Schweisskonstruktion ausgebildet; er ist auf eine hohle Mittelsäule 8 aufgesetzt, die ihrerseits mit einem Aufstellfuss 9 verbunden ist.

Im Inneren des Käfigs 1 ist ein trommelförmiger Werkstückträger 10 um eine Vertikalachse drehbar angeordnet, der an seiner Umfangsfläche bei 11 angedeutete Werkstückspannvorrichtungen trägt und mit einer koaxialen, zylindrischen Schalttrommel 12 verbunden ist, die ihrerseits in dem oberen Wandteil 3 des Käfigs 1 drehbar gelagert ist, derart, dass der Werkstückträger 10 im Inneren des Käfigs 1 freihängend angeordnet ist. Die Schalttrommel 12 ist mit einem bei 13 angedeuteten Schrittantrieb gekuppelt, der es gestattet, den Werkstückträger 10 schrittweise derart weiterzuschalten, dass die in den Werkzeugspannvorrichtungen 11 gespannten Werkstücke aufeinanderfolgend in einzelne Bearbeitungsstationen überführt werden, von denen fünf in Fig. 2 bei I bis V angedeutet sind. In den den einzelnen Bearbeitungsstationen I bis V entsprechenden Winkelstellungen ist der Werkstückträger 10 durch nicht weiter dargestellte Einrichtungen jeweils ortsfest verriegelbar.

Die Anordnung ist derart getroffen, dass nach Abnahme des Werkstückträgers 10 von der Schalttrommel 12 diese nach oben zu aus dem Käfig herausgezogen werden kann, so dass sich eine sehr leichte Montage und Demontage ergibt.

In den einzelnen Bearbeitungsstationen I bis V sind Bearbeitungseinheiten vorgesehen, von denen beispielsweise die Bearbeitungseinheiten 14a–14e in die seitlichen Streben 4 des Käfigs 1 eingesetzt sind und mit ihren nicht weiter dargestellten Pinolen in Horizontalebenen liegen oder eine vorbestimmte Winkellage gegenüber der Horizontalebene einnehmen, während Bearbeitungseinheiten 15a–15e in den oberen Wandteil 3 des Käfigs 1 eingefügt sind und die Werkstücke von oben her bearbeiten. Ausserdem sind noch Bearbeitungseinheiten 16 in den unteren Wandteil 2 des Käfigs 1 eingesetzt, so dass sie die Werkstücke von unten her bearbeiten können, wie dies aus Fig. 1 ersichtlich ist.

Alle Bearbeitungseinheiten 14, 15, 16 sind ersichtlich von aussen her mittels zugeordneter Halterungsteile 17 in entsprechende Lagerteile des Käfigs 1 eingesetzt, so dass die eigentlichen Bearbeitungseinheiten, d. h. ihre Vorschubeinrichtungen, ihre Antriebsmotoren, ihre Stromversorgungseinheiten, ihre Getriebe usw. ausserhalb des Käfigs 1 liegen und lediglich die Arbeitsspinolen in den Käfiginnenraum einstechen. Die Bearbeitungseinheiten 14, 15, 16 können demgemäss auch von aussen her gewartet und erforderlichenfalls ausgetauscht werden.

Im Bereiche der Arbeitsstationen I bis V sind in dem Käfig 1 zwischen den Streben 4 Bedienungsöffnungen vorgesehen, die es gestatten, die Werkzeuge der einzelnen Bearbeitungseinheiten 14, 15, 16 einzurichten und erforderlichenfalls auszutauschen.

Der untere Wandteil 2 des Käfigs 1 ist innen bei 18 nach Art einer Wanne ausgebildet, in die über eine Öffnung 19 die als Späneabfuhrrohr ausgebildete, hohle Mittelsäule 8 mündet. Die Mittelsäule 8 ist mit einer seitlichen Späneabfuhröffnung 20 versehen, an die sich eine im Inneren der Mittelsäule 8 angeordnete schräge Spänerutsche 21 anschliesst, welche sich nach aussen hin fortsetzt und zu einem Späneförderer führen kann.

Die bei der Bearbeitung anfallenden Späne fallen von den in den Werkstückspannvorrichtungen 11 des Werkstückträgers 10 gespannten Werkstükken frei und unbehindert nach unten, wo sie dann ohne weiteres über das durch die Mittelsäule 8 gebildete zentrische Späneabfuhrrohr abgeführt werden.

Die Bedienungseinrichtungen sind schliesslich im Bereiche der Bedienungsstation 7 vorgesehen; sie sind beispielsweise bei 22 angedeutet.

Der Käfig 1 bildet ein in sich geschlossenes, gehäuseartiges Konstruktionselement, in dem die über die Pinolen der Bearbeitungseinheiten 14, 15, 16 übertragenen Reaktionskräfte aufgenommen werden.

## Patentansprüche

1. Transferautomat mit kreisförmiger Zubringbewegung für die in einzelnen Bearbeitungsstationen (I–V) durch Bearbeitungseinheiten (14, 15, 16) aufeinanderfolgend bearbeitbaren Werkstücke, mit einem um eine Vertikalachse drehbar gelagerten und durch einen Schrittantrieb schrittweise weiterschaltbaren Werkstückträger (10), auf dem Spannvorrichtungen (11) für die Werkstücke angeordnet sind und der in den einzelnen Bearbeitungsstationen entsprechenden Winkelstellungen ortsfest verriegelbar ist, wobei der Werkstückträger (10) zwischen zwei im Abstand zu ihm gehaltenen, ortsfesten, im wesentlichen scheibenförmigen Wandteilen (2, 3) angeordnet ist, von denen das untere Wandteil (2) durch von Bearbeitungskräften freie Stützteile (8, 9) in einer die erforderliche Arbeitshöhe des Werkstückträgers ergebenden Höhe gehalten ist, in welche Wandteile (2, 3) von oben und von unten her wirkende Bearbeitungseinheiten (15, 16) jeweils von aussen her eingesetzt sind und auf die randseitig sich zwischen ihnen erstreckende Konstruktionselemente aufgesetzt sind, in die von aussen her ebenfalls Bearbeitungseinheiten (14) eingesetzt sind, dadurch gekennzeichnet, dass die beiden scheibenförmigen Wandteile (2, 3) lediglich zusammen mit den ringsum seitlich angeordneten Konstruktionsteilen (4) einen starren, zweischaligen Käfig bilden, der in Schweisskonstruktion ausgeführt ist und dessen beide Schalen durch aussteifende Querrippen (5) miteinander verbunden sind, dass der Werkstückträger (10) im Käfiginneren nur an dem oberen Wandteil (3) drehbar gelagert aufgehängt ist und dass die innere Schale (18) des unteren Wandteiles (2) nach Art einer Wanne ausgebildet ist und eine mittige Späneabfuhröffnung (19) aufweist.

2. Transferautomat nach Anspruch 1, dadurch gekennzeichnet, dass der Käfig (1) durch eine hohle Mittelsäule (8) abgestützt ist, die als Späneabfuhrrohr ausgebildet ist und in die die Späneabfuhr-Öffnung (19) mündet.

3. Transferautomat nach Anspruch 2, dadurch gekennzeichnet, dass die Mittelsäule (8) eine seitliche Späneabfuhröffnung (20) aufweist, an die sich eine im Inneren der Mittelsäule (8) angeordnete Spänerutsche (21) anschliesst.

4. Transferautomat nach Anspruch 1, dadurch gekennzeichnet, dass der Käfig (1) in der Horizontalebene eine im wesentlichen kreisrunde Querschnittsgestalt aufweist.

5. Transferautomat nach Anspruch 4, dadurch gekennzeichnet, dass der Käfig (1) im Bereiche einer Bedienungsstation einen segmentartigen Ausschnitt (7) aufweist.

6. Transferautomat nach Anspruch 1, dadurch gekennzeichnet, dass die ausserhalb des Käfigs (1) liegenden Bearbeitungseinheiten (14, 15, 16) mit Halterungsteilen (17) von aussen her in entsprechende Lagerteile des Käfigs (1) eingesetzt sind, die in dem oberen und/oder unteren Wandteil (3, 2) sowie in den seitlichen Konstruktionselementen (4) des Käfigs (1) angeordnet sind.

7. Transferautomat nach Anspruch 1, dadurch gekennzeichnet, dass der Werkstückträger (10) auf einer Schalttrommel (12) sitzt, die in dem oberen Wandteil (3) des Käfigs (1) nach oben zu herausnehmbar gelagert ist.

8. Transferautomat nach Anspruch 1, dadurch gekennzeichnet, dass der Käfig (1) im Bereiche der einzelnen Bearbeitungsstationen (I–V) die Wartung der Werkzeuge der Bearbeitungseinheiten (14, 15, 16) gestattende Bedienungsöffnungen aufweist.

## Claims

1. An automatic transfer machine in which the individual workpieces to be consecutively worked by working units (14, 15, 16) are fed to the individual working stations (I–V) by a circular feeding motion, and which comprises a workpiece carrier (10) carrying chucking means (11) for the workpieces, the said carrier being arranged for rotation about a vertical axis, for being indexed in steps by a stepping drive and for being locked in angular positions corresponding to the individual working stations, the workpiece carrier (10) being provided between two stationary, substantially disk-shaped wall portions (2, 3) which are arranged at a certain distance relative to it, the lower one (2) of the said wall portions being held by supporting parts (8, 9) not subject to any working forces at a height just right to give the workpiece holder the necessary working height, with working units (15, 16) acting from the top and from the bottom and being placed from the outside into the said wall portions (2, 3) and with structural elements which extend between the edges of said wall portions and into which other working units (14) are inserted from the outside, characterized in that the two disk-shaped wall portions (2, 3) form only in combination with the structural parts (4) arranged laterally over the full circumference, a rigid two-shell cage of welded construction whose two shells are interconnected by reinforcing transverse ribs (5), that the workpiece carrier (10) seated in the said cage is rotatably suspended only on te upper wall portion (3) and that the inner shell (18) of the lower wall portion (2) is designed in the form of a trough and provided with a central chip-removal opening (19).

2. An automatic transfer machine in accordance with claim 1, characterized in that the cage (1) is supported by a hollow central column (8) designed as chip-removal pipe and leading to the chip-removal opening (19).

3. An automatic transfer machine in accordance with claim 2, characterized in that the central column (8) is provided with a lateral chip-removal opening (20) which communicates with a chip chute (21) arranged within the central column (8).

4. An automatic transfer machine in accordance with claim 1, characterized in that the cross-section of the cage (1) exhibits a substantially circular shape in the horizontal plane.

5. An automatic transfer machine in accordance with claim 4, characterized in that the cage (1) comprises a sector-shaped opening (7) in the area of an operating station.

6. An automatic transfer machine in accordance with claim 1, characterized in that the working units (14, 15, 16) arranged outside the cage (1) are inserted by means of mounting parts (17) from the outside into corresponding supporting parts of the cage (1) arranged in the upper and/or lower wall portion (3, 2) and the lateral structural elements (4) of the cage (1).

7. An automatic transfer machine in accordance with claim 1, characterized in that the workpiece carrier (10) is seated on an indexing drum (12) which is mounted in the upper wall portion (3) of the cage (1) and which can be removed from the outside.

8. An automatic transfer machine in accordance with claim 1, characterized in that the cage (1) is provided in the area of the individual working stations (I to V) with operating openings permitting the servicing of the tools of the working units (14, 15, 16).

**Revendications**

1. Machine de transfert automatique à mouvement d'amenée circulaire pour les pièces qui doivent être usinées les unes après les autres par des unités d'usinage (14, 15, 16) dans différents postes de travail (I–V), comportant un portepièce (10) monté mobile en rotation autour d'un axe vertical et pouvant être déplacé pas à pas par un système d'entraînement intermittent, portepiecè sur lequel sont installés des dispositifs de serrage (11) pour les pièces à usiner et qui peut être verrouillé dans des positions angulaires correspondant aux différents postes de travail, ce porte-pièce étant placé entre deux parties de paroi (2, 3) fixes, sensiblement en forme de disques et maintenues à distance de lui et dont la partie inférieure (2) est maintenue par des éléments-supports (8, 9) exempts d'efforts d'usinage à un niveau déterminant la hauteur de travail nécessaire du porte-pièce, parties de paroi (2, 3) dans lequelles on engage à chaque fois à partir de l'extérieur des unités d'usinage (15, 16) agissant par un haut et par en bas et sur les bords desquelles sont placés des éléments de construction s'étendant entre elles et dans lesquelles des unités d'usinage (14) sont également engagées de l'extérieur, caractérisée par le fait que les deux parties de paroi (2, 3) en forme de disques constituent, avec les seuls éléments de construction (4) disposés latéralement tout autour, une cage rigide à deux coques qui est exécutée en construction soudée et dont les deux coques sont mutuellement raccordées par les nervures transversales de raidissement (5), que le porte-pièce (10) à l'intérieur de la cage est suspendu et monté rotatif sur la partie de paroi supérieure (3) et que la coque interne (18) de la partie de paroi inférieure (2) est réalisée en forme de cuve et comporte un orifice de sortie de copeaux central (19).

2. Machine de transfert automatique selon la revendication 1, caractérisée par le fait que la cage (1) est supportée par une colonne centrale creuse (8) qui est réalisée sous la forme d'un tube d'évacuation de copeaux et débouche dans l'orifice de sortie de copeaux (19).

3. Machine de transfert automatique selon la revendication 2, caractérisée par le fait que la colonne centrale (8) comporte un orifice de sortie de copeaux latérale (20) auquel se raccorde une goulotte à copeaux (21) disposée à l'intérieur de la colonne centrale (8).

4. Machine de transfert automatique selon la revendication 1, caractérisée par le fait que la cage (1) dans le plan horizontal présente une section transversale sensiblement circulaire.

5. Machine de transfert automatique selon la revendication 4, caractérisée par le fait que la cage (1) dans la zone d'un poste de manoeuvre comporte une découpure (7) en forme de segment.

6. Machine de transfert selon la revendication 1, caractérisée par le fait que les unités d'usinage (14, 15, 16) situées à l'extérieur de la cage (1) sont installées avec des éléments supports (17) à partir de l'extérieur dans des éléments d'appui (28) correspondants de la cage (1), ces éléments étant disposés dans les parties de paroi supérieure et/ou inférieure (3, 2) ainsi que dans les éléments de construction latérale (4) de la cage (1).

7. Machine de transfert automatique selon la revendication 1, caractérisée par le fait que le porte-pièce (10) repose sur un tambour de commande (12) qui est monté dans la partie de paroi supérieure (3) de la cage (1) de façon à pouvoir être extrait par le haut.

8. Machine de transfert automatique selon la revendication 1, caractérisée par le fait que la cage (1) dans la zone des différents postes de travail (I à V) comporte des ouvertures de visite permettant l'entretien des outils des unités d'usinage (14, 15, 16).

Fig. 1

Fig. 2